(19) Europäisches Patentamt / European Patent Office / Office européen des brevets

(11) **EP 2 999 849 B1**

(12) **EUROPEAN PATENT SPECIFICATION**

(45) Date of publication and mention
of the grant of the patent:
**14.10.2020 Bulletin 2020/42**

(21) Application number: **14832879.2**

(22) Date of filing: **02.06.2014**

(51) Int Cl.:
*E21B 29/00* (2006.01)   *C09K 8/00* (2006.01)
*E21B 34/08* (2006.01)   *E21B 43/12* (2006.01)

(86) International application number:
**PCT/US2014/040565**

(87) International publication number:
**WO 2015/017021 (05.02.2015 Gazette 2015/05)**

(54) **METHOD FOR REMOVING A WELLBORE ISOLATION DEVICE CONTAINING A SUBSTANCE THAT UNDERGOES A PHASE TRANSITION**

VERFAHREN ZUM ENTFERNEN EINER BOHRLOCHISOLIERUNGSVORRICHTUNG MIT EINER SUBSTANZ UNTER EINEM PHASENÜBERGANG

MÉTHODE POUR RETIRER UN DISPOSITIF D'ISOLEMENT DE PUITS DE FORAGE CONTENANT UNE SUBSTANCE QUI SUBIT UNE TRANSITION DE PHASE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.08.2013 US 201313957816**

(43) Date of publication of application:
**30.03.2016 Bulletin 2016/13**

(73) Proprietor: **Halliburton Energy Services, Inc.**
**Houston, TX 77072 (US)**

(72) Inventors:
• **FRIPP, Michael, L.**
**Carrollton, TX 75006 (US)**
• **WALTON, Zachary, W.**
**Carrollton, TX 75006 (US)**
• **HOWELL, Matthew, L.**
**Duncan, OK 73536 (US)**

(74) Representative: **Hoffmann Eitle**
**Patent- und Rechtsanwälte PartmbB**
**Arabellastraße 30**
**81925 München (DE)**

(56) References cited:
WO-A2-2014/100141    US-A1- 2005 205 266
US-A1- 2006 037 748    US-A1- 2007 199 693
US-A1- 2008 093 073    US-A1- 2008 133 193
US-A1- 2010 032 151    US-A1- 2011 011 591
US-A1- 2011 094 755    US-A1- 2011 278 011
US-A1- 2012 118 583    US-A1- 2013 081 801
US-B1- 6 237 688

## Description

### Technical Field

A method of removing a wellbore isolation device is provided.

### Background

US 2011/278011 A1 discloses materials and method for temporarily obstructing portions of drilled wells, and further background art is disclosed in US 2011/011591 A1, US 2013/081801 A1, US 2008/093073 A1, US 2010/032151 A1 and US 2005/0205266 A1.

### Summary of the Invention

According to the present invention, there is provided a method of removing a wellbore isolation device as recited in claim 1 below.

The dependent claims define particular embodiments.

### Brief Description of the Figures

The features and advantages of certain embodiments will be more readily appreciated when considered in conjunction with the accompanying figures. The figures are not to be construed as limiting any of the preferred embodiments.

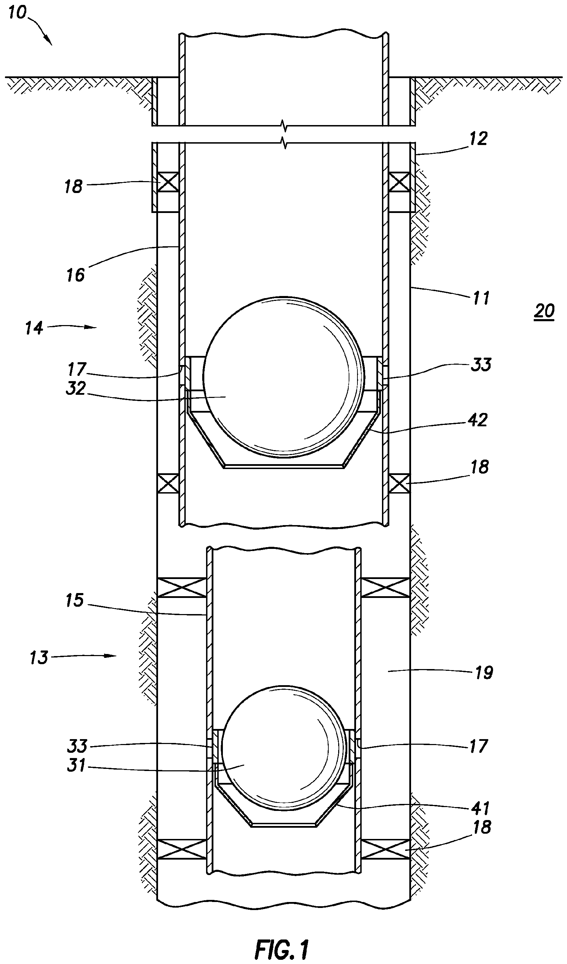

**Fig. 1** depicts a well system containing more than one isolation device.

### Detailed Description

As used herein, the words "comprise," "have," "include," and all grammatical variations thereof are each intended to have an open, non-limiting meaning that does not exclude additional elements or steps.

It should be understood that, as used herein, "first," "second," "third," etc., are arbitrarily assigned and are merely intended to differentiate between two or more compositions, substances, etc., as the case may be, and does not indicate any particular orientation or sequence. Furthermore, it is to be understood that the mere use of the term "first" does not require that there be any "second," and the mere use of the term "second" does not require that there be any "third," *etc.*

As used herein, a "fluid" is a substance having a continuous phase that tends to flow and to conform to the outline of its container when the substance is tested at a temperature of 71 °F (21.7 °C) and a pressure of one atmosphere "atm" (0.1 megapascals "MPa"). A fluid can be a liquid or gas.

Oil and gas hydrocarbons are naturally occurring in some subterranean formations. A subterranean formation containing oil or gas is sometimes referred to as a reservoir. A reservoir may be located under land or off shore. Reservoirs are typically located in the range of a few hundred feet (shallow reservoirs) to a few tens of thousands of feet (ultra-deep reservoirs). In order to produce oil or gas, a wellbore is drilled into a reservoir or adjacent to a reservoir.

A "well" can include, without limitation, an oil, gas, or water production well, an injection well, or a geothermal well. As used herein, a "well" includes at least one wellbore. A wellbore can include vertical, inclined, and horizontal portions, and it can be straight, curved, or branched. As used herein, the term "wellbore" includes any cased, and any uncased, open-hole portion of the wellbore. A near-wellbore region is the subterranean material and rock of the subterranean formation surrounding the wellbore. As used herein, a "well" also includes the near-wellbore region. The near-wellbore region is generally considered to be the region within approximately 30,48 m (100 feet) of the wellbore. As used herein, "into a well" means and includes into any portion of the well, including into the wellbore or into the near-wellbore region via the wellbore.

A portion of a wellbore may be an open hole or cased hole. In an open-hole wellbore portion, a tubing string may be placed into the wellbore. The tubing string allows fluids to be introduced into or flowed from a remote portion of the wellbore. In a cased-hole wellbore portion, a casing is placed into the wellbore that can also contain a tubing string. A wellbore can contain an annulus. Examples of an annulus include, but are not limited to: the space between the wellbore and the outside of a tubing string in an open-hole wellbore; the space between the wellbore and the outside of a casing in a cased-hole wellbore; and the space between the inside of a casing and the outside of a tubing string in a cased-hole wellbore.

It is not uncommon for a wellbore to extend several hundreds of feet or several thousands of feet into a subterranean formation. The subterranean formation can have different zones. A zone is an interval of rock differentiated from surrounding rocks on the basis of its fossil content or other features, such as faults or fractures. For example, one zone can have a higher permeability compared to another zone. It is often desirable to treat one or more locations within multiples zones of a formation. One or more zones of the formation can be isolated within the wellbore via the use of an isolation device. An isolation device can be used for zonal isolation and functions to block fluid flow within a tubular, such as a tubing string, or within an annulus. The blockage of fluid flow prevents the fluid from flowing into the zones located downstream of the isolation device and isolates the zone of interest. As used herein, the relative term "downstream" means at a location further away from a wellhead. In this manner, treatment techniques can be performed within the zone of interest.

The isolation device is a ball, a plug, a bridge plug, a wiper plug, and a packer. It is to be understood that reference to a "ball" is not meant to limit the geometric shape of the ball to spherical, but rather is meant to include any device that is capable of engaging with a seat. A "ball" can be spherical in shape, but can also be a dart, a bar, or any other shape. Zonal isolation can be accomplished, for example, via a ball and seat by dropping the ball from the wellhead onto the seat that is located within the wellbore. The ball engages with the seat, and the seal created by this engagement prevents fluid communication into other zones downstream of the ball and seat. In order to treat more than one zone using a ball and seat, the wellbore can contain more than one ball seat. For example, a seat can be located within each zone. Generally, the inner diameter (I.D.) of the tubing string where the ball seats are located is different for each zone. For example, the I.D. of the tubing string sequentially decreases at each zone, moving from the wellhead to the bottom of the well. In this manner, a smaller ball is first dropped into a first zone that is the farthest downstream; that zone is treated; a slightly larger ball is then dropped into another zone that is located upstream of the first zone; that zone is then treated; and the process continues in this fashion - moving upstream along the wellbore - until all the desired zones have been treated. As used herein, the relative term "upstream" means at a location closer to the wellhead.

A bridge plug is composed primarily of slips, a plug mandrel, and a rubber sealing element. A bridge plug can be introduced into a wellbore and the sealing element can be caused to block fluid flow into downstream zones. A packer generally consists of a sealing device, a holding or setting device, and an inside passage for fluids. A packer can be used to block fluid flow through the annulus located between the outside of a tubular and the wall of the wellbore or inside of a casing.

Isolation devices can be classified as permanent or retrievable. While permanent isolation devices are generally designed to remain in the wellbore after use, retrievable devices are capable of being removed after use. It is often desirable to use a retrievable isolation device in order to restore fluid communication between one or more zones. Traditionally, isolation devices are retrieved by inserting a retrieval tool into the wellbore, wherein the retrieval tool engages with the isolation device, attaches to the isolation device, and the isolation device is then removed from the wellbore. Another way to remove an isolation device from the wellbore is to mill at least a portion of the device. Yet, another way to remove an isolation device is to contact the device with a solvent, such as an acid, thus dissolving all or a portion of the device.

However, some of the disadvantages to using traditional methods to remove a retrievable isolation device include: it can be difficult and time consuming to use a retrieval tool; milling can be time consuming and costly; and premature dissolution of the isolation device can occur. For example, premature dissolution can occur if acidic fluids are used in the well prior to the time at which it is desired to dissolve the isolation device.

It is desirable to easily and efficiently remove an isolation device after the device has been used for its intended purpose. A novel method of removing an isolation device includes causing or allowing an increase in the wellbore temperature surrounding the isolation device. The isolation device includes a substance. The substance undergoes a phase transition at the phase transition temperature. The wellbore temperature is increased to at least the phase transition temperature after the isolation device is no longer needed.

The bottomhole temperature of a well varies significantly, depending on the subterranean formation, and can range from about 100 °F to about 600 °F (about 37.8 °C to about 315.6 °C). As used herein, the term "bottomhole" means at the location of the isolation device. It is often desirable to have a substance undergo a phase transition at the bottomhole temperature of a well. As used herein, a "phase transition" means any change that occurs to the physical properties of the substance. As used herein, a "phase transition" can include, without limitation, a change in the phase of the substance (i.e., from a solid to a liquid or semi-liquid, from a liquid or semi-liquid to a gas, etc.), a glass transition, a change in the amount of crystallinity of the substance, physical changes to the amorphous and/or crystalline portions of the substance, and any combinations thereof. A substance will undergo a phase transition at a "phase transition temperature." As used herein, a "phase transition temperature" includes a single temperature and a range of temperatures at which the substance undergoes a phase transition. Therefore, it is not necessary to continually specify that the phase transition temperature can be a single temperature or a range of temperatures throughout. By way of example, a substance will have a glass transition temperature or range of temperatures, symbolized as $T_g$. The $T_g$ of a substance is generally lower than its melting temperature $T_m$. The glass transition can occur in the amorphous regions of the substance.

The glass transition, also called the glass-liquid transition, is a reversible transition in one or more regions of a substance from a hard solid into a molten or rubber-like state at the glass transition temperature ($T_g$). Crystallinity refers to the degree of structural order in a solid. A substance can include both amorphous portions or regions and crystalline portions or regions. In these instances, the crystallinity usually means the percentage of the volume of the substance that is crystalline. The crystalline portions of a substance contain atoms or molecules that are arranged in a regular, periodic manner.

Polymers commonly include amorphous regions and crystalline regions. A polymer is a large molecule composed of repeating units, typically connected by covalent chemical bonds. A polymer is formed from monomers. During the formation of the polymer, some chemical groups can be lost from each monomer. The piece of the monomer that is incorporated into the polymer is known as the repeating unit or monomer residue. The backbone of the polymer is the continuous link between the monomer residues. The polymer can also contain functional groups or side chains connected to the backbone at various locations along the backbone. Polymer nomenclature is generally based upon the type of monomer residues comprising the polymer. A polymer formed from one type of monomer residue is called a homopolymer. A copolymer is formed from two or more different types of monomer residues. The number of repeating units of a polymer is referred to as the chain length of the polymer. The number of repeating units of a polymer can range from approximately 11 to greater than 10,000. In a copolymer, the repeating units from each of the monomer residues can be arranged in various manners along the polymer chain. For example, the repeating units can be random, alternating, periodic, or block. The conditions of the polymerization reaction can be adjusted to help control the average number of repeating units (the average chain length) of the polymer. As used herein, a "polymer" can include a cross-linked polymer. As used herein, a "cross link" or "cross linking" is a connection between two or more polymer molecules. A cross-link between two or more polymer molecules can be formed by a direct interaction between the polymer molecules, or conventionally, by using a cross-linking agent that reacts with the polymer molecules to link the polymer molecules.

A polymer has an average molecular weight, which is directly related to the average chain length of the polymer. For a copolymer, each of the monomers will be repeated a certain number of times (number of repeating units). The average molecular weight for a copolymer can be expressed as follows:

$$\text{Avg. molecular weight} = (M.W.m_1 * RU\ m_1) + (M.W.m_2 * RU\ m_2)$$

where $M.W.m_1$ is the molecular weight of the first monomer; $RU\ m_1$ is the number of repeating units of the first monomer; $M.W.m_2$ is the molecular weight of the second monomer; and $RU\ m_2$ is the number of repeating units of the second monomer. Of course, a terpolymer would include three monomers, a tetra polymer would include four monomers, and so on.

Prior to a phase transition, the substance of the isolation device is capable of withstanding a pressure differential in the wellbore. As used herein, the term "withstanding" means that the substance does not crack, break, extrude, or collapse. The pressure differential can be the bottomhole pressure of the subterranean formation across the device. The bottomhole temperature of the wellbore can also be cooled to increase the strength of the substance such that the substance withstands the pressure differential. After the substance undergoes at least one phase transition, then the strength of the substance is decreased. The decrease in strength can be, without limitation, a result of any of the following: the substance transforms from a solid to a liquid or semi-liquid; the substance dissolves; the substance degrades; the substance is capable of breaking into smaller pieces; and/or the stiffness of the substance is decreased. For substances, degradation means the decomposition of chemical compounds. One example of degradation for a polymer is hydrolytic degradation of the polymer molecule. The substance, for example in the form of a ball, can slough off or lose outer layers of the ball due to the degradation of the substance. This in turn causes the substance and the ball to lose strength.

The wellbore isolation device comprises a substance, wherein the substance: (A) is a plastic; and (B) undergoes a phase transition at a phase transition temperature.

According to the invention, the method of removing a wellbore isolation device comprises: causing the temperature surrounding the wellbore isolation device to increase, wherein the temperature surrounding the wellbore isolation device is increased to a temperature that is greater than or equal to the phase transition temperature; and allowing at least a portion of the substance to undergo the phase transformation.

According to an embodiment, the method further comprises: (A) decreasing the temperature of at least a portion of the wellbore; (B) positioning a wellbore isolation device in the at least a portion of the wellbore, wherein the isolation device is positioned after decreasing the temperature, and wherein the wellbore isolation device comprises a substance, wherein the substance: (i) is a plastic; and (ii) undergoes a phase transition at a phase transition temperature, wherein the temperature of the at least the portion of the wellbore is decreased to a temperature that is less than the phase transition temperature.

Turning to the Figures, **Fig. 1** depicts a well system **10**. The well system **10** can include at least one wellbore **11**. The wellbore **11** can penetrate a subterranean formation **20**. The subterranean formation **20** can be a portion of a reservoir or adjacent to a reservoir. The wellbore **11** can include a casing **12**. The wellbore **11** can include only a generally vertical wellbore section or can include only a generally horizontal wellbore section. A first section of tubing string **15** can be installed in the wellbore **11.** A second section of tubing string **16** (as well as multiple other sections of tubing string, not shown) can be installed in the wellbore **11.** The well system **10** can comprise at least a first zone **13** and a second zone **14.** The well system **10** can also include more than two zones, for example, the well system **10** can further include a third zone, a fourth zone, and so on. The well system **10** can further include one or more packers **18.** The packers **18** can be used in addition to the isolation device to isolate each zone of the wellbore **11.** The isolation device can be the packers **18.** The packers **18** can be used to help prevent fluid flow between one or more zones (*e.g.,* between the first zone **13** and the second zone **14**) via an annulus **19.** The tubing string **15/16** can also include one or more ports **17.** One or more ports **17** can be located in each section of the tubing string. Moreover, not every section of the tubing string needs to include one or more ports **17.** For example, the first section of tubing string **15** can include one or more ports **17,** while the second section of tubing string **16** does not contain a port. In this manner, fluid flow into the annulus **19** for a particular section can be selected based on the specific oil or gas operation.

It should be noted that the well system **10** is illustrated in the drawings and is described herein as merely one example of a wide variety of well systems in which the principles of this disclosure can be utilized. It should be clearly understood that the principles of this disclosure are not limited to any of the details of the well system **10,** or components thereof, depicted in the drawings or described herein. Furthermore, the well system **10** can include other components not depicted in the drawing. For example, the well system **10** can further include a well screen. By way of another example, cement may be used instead of packers **18** to aid the isolation device in providing zonal isolation. Cement may also be used in addition to packers **18.**

As can be seen in **Fig. 1,** the first section of tubing string **15** can be located within the first zone **13** and the second section of tubing string **16** can be located within the second zone **14.** The isolation device can be, without limitation, an occlusion and a baffle, a plug, a bridge plug, a wiper plug, and a packer. The occlusion can be a frac ball and the baffle can be a ball seat. A frac ball is a ball used in conjunction with hydraulic fracturing operations. The frac ball and seat can isolate one zone of the wellbore from another zone of the wellbore to allow a fracturing operation to be performed in the desired wellbore zone. As depicted in the drawings, the isolation device can be a ball **30** (*e.g.,* a first ball **31** or a second ball **32)** and a seat **40** (*e.g.,* a first seat **41** or a second seat **42**). The ball **30** can engage the seat **40.** The seat **40** can be located on the inside of a tubing string. When the first section of tubing string **15** is located downstream of the second section of tubing string **16,** then the inner diameter (I.D.) of the first section of tubing string **15** can be less than the I.D. of the second section of tubing string **16.** In this manner, a first ball **31** can be placed into the first section of tubing string **15.** The first ball **31** can have a smaller diameter than a second ball **32.** The first ball **31** can engage a first seat **41.** Fluid can now be temporarily restricted or prevented from flowing into any zones located downstream of the first zone **13.** In the event it is desirable to temporarily restrict or prevent fluid flow into any zones located downstream of the second zone **14,** the second ball **32** can be placed into second section of tubing string **16** and will be prevented from falling into the first section of tubing string **15** via the second seat **42** or because the second ball **32** has a larger outer diameter (O.D.) than the I.D. of the first section of tubing string **15.** The second ball **32** can engage the second seat **42.** The ball (whether it be a first ball **31** or a second ball **32**) can shift a downhole tool during positioning the ball in the portion of the wellbore. For example, the ball can engage a sliding sleeve **33** during placement. This engagement with the sliding sleeve **33** can cause the sliding sleeve to move; thus, opening a port **17** located adjacent to the seat. The ball can also include a magnetic signature that, when in proximity to the tool, triggers an electronic assembly on the tool to cause the tool to shift. The port **17** can also be opened via a variety of other mechanisms instead of a ball. The use of other mechanisms may be advantageous when the isolation device is not a ball. After placement of the isolation device, fluid can be flowed from, or into, the subterranean formation **20** via one or more opened ports **17** located within a particular zone. As such, a fluid can be produced from the subterranean formation **20** or injected into the formation.

The isolation device is at least partially capable of restricting or preventing fluid flow between a first zone **13** and a second zone **14.** By way of example, the isolation device can be used to restrict or prevent fluid flow between different zones within the tubing string while packers **18** and/or cement can be used to restrict or prevent fluid flow between different zones within the annulus **19.** The isolation device can also be the only device used to prevent or restrict fluid flow between zones. By way of another example, there can also be two or more isolation devices positioned within a given zone. According to this example, one isolation device can be a packer while the other isolation device can be a ball and seat or a bridge plug. The first zone **13** can be located upstream or downstream of the second zone **14.** In this manner, depending on the oil or gas operation, fluid is restricted or prevented from flowing downstream or upstream into the second zone **14.**

The isolation device comprises a substance. The substance is a plastic. The substance can be a polymer. The substance can be amorphous, crystalline, or combinations thereof in any proportion. The crystallinity (i.e., the volume % of the substance that is crystalline) can vary and can be preselected. For example, the polymerization reaction for a polymeric substance can be controlled to provide a lower or higher volume % of crystalline regions. The polymer can contain amorphous and crystalline regions. The polymer can be a homopolymer or a copolymer. For a copolymer, the repeating units can be random, alternating, periodic, or block. The polymer can be a cross-linked polymer. The polymer can be an aliphatic polyester or a polyanhydride. Suitable examples of thermoplastic polymers include, but are not limited to, polyglycolic acid (PGA) or polylactic acid (PLA). The polymer can also include non-reactive side chains. The addition of non-reactive side chains can be used to adjust the phase transition temperature of the substance. By way of example, the addition of non-reactive side chains can decrease the glass-transition temperature ($T_g$) of the substance. Moreover, the monomer residues and ratios thereof can be adjusted to provide a desired phase transition temperature of the substance.

The substance undergoes a phase transition at a phase transition temperature. As discussed earlier, the phase transition temperature can be a single temperature or a range of temperatures. By way of example, PGA has a glass-transition temperature in the range of 95 °F to 104 °F (35 °C to 40 °C). The phase transition can be a change in the phase of the substance (*e.g.,* a solid/liquid phase transition), a glass transition, a change in the amount of crystallinity of the substance, physical changes to the amorphous and/or crystalline portions of the substance, and any combinations thereof. The solid/liquid phase transition is the transition of the substance from a solid to a liquid or semi-liquid or *vice versa.* The substance can also have more than one phase transition temperature, wherein the phase transitions are different. By way of example, the substance can have a phase transition of a glass transition and a change in the phase of the substance (*e.g.,* the solid/liquid phase transition). The glass transition temperature can be less than the solid/liquid phase transition temperature. According to this embodiment, the substance can undergo more than one phase transition, wherein the phase transitions are different. Accordingly, the substance can undergo at least two of the following changes: a solid/liquid phase transition, a glass transition, a change in the amount of crystallinity of the substance, and physical changes to the amorphous and/or crystalline portions of the substance.

The methods can include decreasing the temperature of at least a portion of the wellbore. The decrease in temperature can be performed prior to positioning the wellbore isolation device in the at least the portion of the wellbore. The step of decreasing can include introducing a cooling fluid into the portion of the wellbore. The cooling fluid can be a variety of types of fluids used in oil or gas operations, for example, drilling fluids, injection fluids, fracturing fluids, work-over fluids, acidizing fluids, gravel packing fluids, completion fluids, and stimulation fluids. According to this embodiment, the cooling fluid being introduced into the wellbore **11** has a surface temperature that is less than the phase transformation temperature of the substance. By way of example, fracturing fluids can cool the bottomhole temperature of the portion of the wellbore by over 100 °F (37.8 °C). By way of another example, the fracturing fluids can cool the bottomhole temperature to within 10 °F (-12.2 °C) of the surface temperature of the injected fluid. The temperature of the portion of the wellbore is decreased to a temperature that is less than or equal to the phase transition temperature of the substance. According to an embodiment, the temperature of the portion of the wellbore is decreased to a temperature that is less than glass-transition temperature and/or the solid/liquid phase transition temperature of the substance. In this manner, the substance is initially subjected to a wellbore temperature that is less than any of the phase transition temperatures of the substance.

The methods can also include the step of positioning the wellbore isolation device in the at least a portion of the wellbore. The step of positioning can be performed after the step of decreasing the temperature of at least a portion of the wellbore. According to another embodiment, the methods can further include the step of positioning the isolation device in a portion of the wellbore **11,** wherein the step of positioning is performed prior to the step of increasing the temperature surrounding the wellbore isolation device. According to another embodiment, the methods do not include the step of decreasing the temperature of the at least the portion of the wellbore. This embodiment can be useful when the portion of the wellbore already has a temperature that is less than any of the phase transition temperatures of the substance. Accordingly, it may not be necessary to cool the portion of the wellbore to a temperature that is less than the phase transition temperature of the substance. This may be applicable when the isolation device is introduced into an upper portion of the wellbore, where wellbore temperatures in this portion may be less than the substance's phase transition temperature. The step of positioning can include installing the wellbore isolation device in the portion of the wellbore. More than one isolation device can also be positioned in multiple portions of the wellbore. The isolation device is positioned such that it is capable of restricting or preventing fluid flow within a portion of the wellbore. The isolation device can also be positioned such that a first zone is isolated from a second zone.

The methods include causing or allowing the temperature surrounding the wellbore isolation device to increase, wherein the temperature surrounding the wellbore isolation device is increased or allowed to increase to a temperature that is greater than or equal to the phase transition temperature of the substance. The temperature can be increased or allowed to increase after the positioning the wellbore isolation device in the at least the portion of the wellbore. As used herein, the phrase "surrounding the wellbore isolation device" means the area immediately adjacent to at least a portion of the isolation device. By way of example, the isolation device can be surrounded on the top, bottom, and sides of the device. At least one area surrounding the isolation device can have an increase in temperature at one time and another area surrounding the isolation device can have an increase in temperature at another time. For example, the area immediately adjacent to the top portion of the isolation device can have an increase in temperature and then the area immediately adjacent to the bottom portion of the device can later have an increase in temperature.

The causation of the temperature increase can include introducing a fluid into the bottomhole portion of the wellbore **11**. The fluid can be a liquid or a gas. The fluid can be a heated fluid. According to an embodiment, prior to and during introduction, the fluid has a temperature greater than or equal to the phase transition temperature of the substance. The allowance of the temperature increase can include a cessation of the cooling fluid into the portion of the wellbore **11.** After the cooling fluid is no longer being introduced into the portion of the wellbore **11,** the fluid no longer cools the area surrounding the isolation device, and the subterranean formation **20** can increase the bottomhole temperature and the bottomhole temperature will gradually revert to the formation temperature. According to these embodiments, the subterranean formation **20** is capable of increasing the bottomhole temperature to a temperature greater than or equal to the phase transformation temperature of the substance.

According to an embodiment, the substance is capable of withstanding a specific pressure differential. As used herein, the term "withstanding" means that the substance does not crack, break, extrude, or collapse. The pressure differential can be the bottomhole pressure of the subterranean formation **20** across the device. Formation pressures can range from about 1,000 to about 30,000 pounds force per square inch (psi) (about 6.9 to about 206.8 megapascals "MPa"). The pressure differential can also be created during oil or gas operations. For example, a fluid, when introduced into the wellbore **11** upstream or downstream of the isolation device, can create a higher pressure above or below, respectively, of the isolation device. Pressure differentials can range from about 100 to over 10,000 psi (about 0.7 to over 68.9 MPa). The portion of the wellbore preferably has a temperature less than the phase transition temperature of the substance at least prior to and during positioning the isolation device in the wellbore portion. In this manner, the substance either maintains or has an increase in strength due to the temperature of the portion of the wellbore and is capable of withstanding the specific pressure differential. As a result, the isolation device can be used to maintain zonal isolation within the wellbore.

The substance undergoes the phase transition at the phase transition temperature. The methods include allowing at least a portion of the substance to undergo the phase transition. The entirety of the substance can also undergo the phase transition at the phase transition temperature. According to an embodiment, during and after the substance undergoes the phase transition the strength of the substance is decreased. The decrease in strength can be, without limitation, a result of any of the following: the substance transforms from a solid to a liquid or semi-liquid; the substance dissolves; the substance degrades; the substance is capable of breaking into smaller pieces; and/or the stiffness of the substance is decreased. According to an embodiment, the substance degrades via hydrolytic degradation of the polymer molecule. The substance, for example in the form of a ball, can slough off or lose outer layers of the ball due to the degradation of the substance. This in turn causes the substance and the ball to lose strength. After the substance loses strength, the structural integrity of the isolation device can decrease. This allows the isolation device to be removed from the wellbore with minimal effort and expense.

At least the portion of the substance can undergo the phase transition in a desired amount of time. The desired amount of time can be pre-determined, based in part, on the specific oil or gas operation to be performed. The desired amount of time can be in the range from about 1 hour to about 2 months. As discussed previously, the substance, the monomer residue(s) selected and possible ratios thereof, and the addition of non-reactive side chains can be selected to yield a substance with a desired phase transition temperature. The desired phase transition temperature can be determined based on information from a specific subterranean formation. For example, if the formation has a bottomhole temperature of 400 °F (204.4 °C), then the factors listed above can be selected to yield a substance with a phase transition temperature of less than 400 °F (204.4 °C) (*e.g.,* 370 °F (187.8 °C) to 390 °F (198.9 °C). In this manner, during operations, a cooling fluid can generally maintain the bottomhole temperature less than the phase transition temperature. Then, at the desired time, the cooling fluid can be stopped, the fluid no longer cools the area surrounding the isolation device, the formation will increase the bottomhole temperature to approximately 400 °F (204.4 °C), and at least the portion of the substance will undergo the phase transition. Of course, a fluid heated to greater than or equal to the phase transition temperature of the substance can also be introduced into the area surrounding the isolation device at the desired time to cause the phase transition. Moreover, more than one fluid can be introduced into the surrounding area. Multiple fluids, each having a different temperature may be useful when more than phase transition of the substance is desirable. In this manner, a first fluid can be introduced to cause the substance to undergo a glass transition. Then a second fluid having a higher temperature than the first fluid can be introduced to cause the substance to undergo a solid/liquid phase transition (as the glass-transition temperature is generally less than the solid/liquid phase transition temperature).

Tracers are used to help determine whether the substance has undergone the phase transition. The tracers can be, without limitation, radioactive, chemical, electronic, or acoustic. For example, if it is desired that the substance undergoes the phase transition such that the isolation device can be flowed from the wellbore **11** within 5 days and information from a tracer indicates that the isolation device has not moved from its original location, then a fluid having a higher temperature than previous fluids can be introduced into the wellbore to contact the substance. By contrast, if the rate of the phase transition is occurring too quickly, then the temperature of the fluid can be decreased to retard the phase transition of the composition. The tracer is used to determine real-time information on whether the substance has partially or completely undergone the phase transition. By being able to monitor the presence of the tracer, workers at the surface can make on-the-fly decisions that can affect the phase transition rate of the substance. Workers can also monitor whether the substance has undergone more than one phase transition, for example a glass transition and a solid/liquid phase transition.

The methods can further include removing all or a portion of the isolation device, wherein the step of removing is performed after the step of allowing the at least a portion of the substance to undergo the phase transition or after the step of causing or allowing the temperature surrounding the wellbore isolation device to increase. The step of removing can include flowing at least a portion of the isolation device from the wellbore **11.** For a ball and seat isolation device, the ball can at least lose strength after undergoing the phase transition. The substance can, without limitation, break apart, dissolve, degrade, or melt into a liquid or semi-liquid. Now, the entire ball may cease to exist for dissolution, degradation, or melting; or the ball may break into smaller pieces, such that the pieces of the ball can be flowed from the wellbore. For a bridge plug or packer, for example, the substance can be used in an area on the device such that the substance helps to anchor the device to the casing, wall of the wellbore, or inside of a tubing string. Now after the strength of the substance has decreased due to the phase transition, the remaining portions of the device can be easily retrieved from the wellbore, for example, via a retrieval tool.

A method of hydraulically fracturing at least a portion of a subterranean formation penetrated by a wellbore comprises: (A) decreasing the temperature of the wellbore penetrating the portion of the subterranean formation; (B) positioning a wellbore isolation device in the wellbore penetrating the portion of the subterranean formation, wherein the isolation device is positioned after decreasing the temperature, and wherein the wellbore isolation device comprises a substance, wherein the substance: (i) is a plastic; (ii) comprises polyglycolic acid; and (iii) undergoes a phase transition at a phase transition temperature, wherein the temperature of the wellbore penetrating the portion of the subterranean formation is decreased to a temperature that is less than the phase transition temperature; (C) creating one or more fractures in the portion of the subterranean formation; (D) causing or allowing the temperature surrounding the wellbore isolation device to increase, wherein the temperature surrounding the wellbore isolation device is increased or allowed to increase after creating the one or more fractures, and wherein the temperature surrounding the wellbore isolation device is increased or allowed to increase to a temperature that is greater than or equal to the phase transition temperature; and (E) allowing at least a portion of the substance to undergo the phase transformation.

This embodiment can be useful to provide temporary zonal isolation within a wellbore in order to perform a hydraulic fracturing operation. "Hydraulic fracturing," sometimes simply referred to as "fracturing," is a common stimulation treatment. A treatment fluid adapted for this purpose is sometimes referred to as a "fracturing fluid." The fracturing fluid is pumped at a sufficiently high flow rate and high pressure into the wellbore and into the subterranean formation to create or enhance a fracture in the subterranean formation. Creating a fracture means making a new fracture in the formation. Enhancing a fracture means enlarging a pre-existing fracture in the formation. Accordingly, after the isolation device is positioned in the wellbore, a hydraulic fracturing operation can be performed. There can also be more than one portion of the subterranean formation that is fractured. Therefore, more than one isolation device can be used to isolate one or more zones of the subterranean formation whereby a fracturing operation can be performed in all or some of the zones of the formation. The creation of the one or more fractures can include introducing a fracturing fluid into the wellbore. The fracturing fluid can have a temperature that is less than the phase transition temperature of the substance. In this manner, the substance is capable of withstanding a specific pressure differential. During or after the creation of the fracture(s), the temperature of the fracturing fluid can increase to a temperature that is greater than or equal to the phase transition temperature of the substance. In this manner, the substance can undergo the phase transition. Conversely, a heated fluid other than the fracturing fluid can be introduced into the wellbore in the area surrounding the isolation device to cause the substance to undergo the phase transition. This method can also include flowing at least a portion of the isolation device from the wellbore after the fracturing operation has been performed.

## Claims

1. A method of removing a wellbore isolation device (30), having previously been positioned in a portion of a wellbore (11), to restrict or prevent fluid flow within the wellbore, the method comprising:

    by introducing a fluid into the portion of the wellbore, causing the temperature surrounding the wellbore isolation device (30) to increase,
    wherein the wellbore isolation device comprises a substance,
    wherein the substance:

        (A) is a plastic; and
        (B) undergoes a phase transition at a phase transition temperature,

wherein the temperature surrounding the wellbore isolation device is caused to increase to a temperature that is greater than or equal to the phase transition temperature,

allowing at least a portion of the substance to undergo the phase transformation so as to decrease the structural integrity of the wellbore isolation device, and

removing the wellbore isolation device, the structural integrity of which has been decreased, from the wellbore, wherein the isolation device is a ball, optionally a frac ball, a plug, a bridge plug, a wiper plug, or a packer, and wherein a tracer is used to determine whether or the extent to which the substance has undergone the phase transition, and

wherein, based on information from the tracer, the temperature of the introduced fluid is changed or a fluid of a different temperature than a previous fluid is introduced to the portion of the wellbore to affect the phase transition rate of the substance.

2. The method according to Claim 1, wherein the plastic is a thermoplastic.

3. The method according to Claim 1 or 2, wherein the substance is a polymer.

4. The method according to Claim 3, wherein the polymer is a homopolymer, a copolymer, an aliphatic polyester or a polyanhydride, and/or wherein the polymer comprises amorphous and crystalline regions, and/or
wherein the polymer is selected from the group consisting of polyglycolic acid, polylactic acid, and combinations thereof, and/or
wherein the polymer comprises non-reactive side chains.

5. The method according to any preceding claim, wherein the substance undergoes more than one phase transition, wherein the phase transitions are different, optionally,
wherein the substance undergoes at least two of the following changes: a solid/liquid phase transition, a glass transition, a change in the amount of crystallinity of the substance, and physical changes to the amorphous and/or crystalline portions of the substance.

6. The method according to any preceding claim, wherein the isolation device is capable of withstanding a specific pressure differential prior to allowing the at least a portion of the substance to undergo the phase transition, optionally, wherein the pressure differential is in the range from about 1000 to about 25,000 pounds force per square inch (about 6.9 to about 172.4 MPa).

7. The method according to any preceding claim, wherein during and after the substance undergoes the phase transition the strength of the substance is decreased, optionally,
wherein the decrease in strength is a result of any of the following or combinations thereof: the substance transforms from a solid to a liquid or semi-liquid; the substance dissolves; the substance degrades; the substance is capable of breaking into smaller pieces; or the stiffness of the substance is decreased, further optionally,
wherein the substance is a polymer, and wherein the substance degrades via hydrolytic degradation of the polymer molecule.

8. The method according to any preceding claim, further comprising positioning the isolation device into a portion of the wellbore (11), wherein the step of positioning is performed prior to causing an increase in the temperature surrounding the wellbore isolation device.

9. The method according to Claim 8, wherein prior to and during positioning of the isolation device, the portion of the wellbore has a temperature less than the phase transition temperature of the substance.

10. The method of any preceding claim, further comprising:

(A) decreasing the temperature of at least a portion of the wellbore;
(B) positioning a wellbore isolation device in the at least a portion of the wellbore, wherein the isolation device is positioned after decreasing the temperature, wherein the temperature of the at least the portion of the wellbore is decreased to a temperature that is less than the phase transition temperature; and
wherein the causing of the temperature surrounding the wellbore isolation device to increase, takes place after positioning the wellbore isolation device.

11. The method according to Claim 10, wherein the step of decreasing comprises introducing a cooling fluid into the at least the portion of the wellbore.

12. The method of Claim 10 or 11 further comprising:
    creating one or more fractures in the portion of the subterranean formation; and
    wherein the substance comprises polyglycolic acid.

**Patentansprüche**

1. Verfahren zum Entfernen einer Bohrlochisolierungsvorrichtung (30), die zuvor in einem Abschnitt eines Bohrlochs (11) positioniert wurde, um einen Fluidstrom innerhalb des Bohrlochs zu beschränken oder zu verhindern, wobei das Verfahren Folgendes umfasst:

   durch Einleiten eines Fluids in den Abschnitt des Bohrlochs, Bewirken, dass die Temperatur, die die Bohrlochisolierungsvorrichtung (30) umgibt, ansteigt,
   wobei die Bohrlochisolierungsvorrichtung eine Substanz umfasst,
   wobei die Substanz:

      (A) ein Kunststoff ist; und
      (B) einen Phasenübergang bei einer Phasenübergangstemperatur durchmacht,

   wobei bewirkt wird, dass die Temperatur, die die Bohrlochisolierungsvorrichtung umgibt, auf eine Temperatur ansteigt, die größer oder gleich der Phasenübergangstemperatur ist,
   Ermöglichen, dass mindestens ein Teil der Substanz die Phasenumwandlung durchmacht, um so die strukturelle Unversehrtheit der Bohrlochisolierungsvorrichtung zu verringern, und
   Entfernen der Bohrlochisolierungsvorrichtung, deren strukturelle Unversehrtheit verringert wurde, aus dem Bohrloch,
   wobei die Isolierungsvorrichtung eine Kugel, optional eine Frac-Kugel, ein Stopfen, ein Brückenstopfen, ein Abstreifstopfen oder ein Packer ist, und
   wobei eine Markierungssubstanz verwendet wird, um festzustellen, ob oder in welchem Umfang die Substanz den Phasenübergang durchgemacht hat, und
   wobei, basierend auf der Information von der Markierungssubstanz, die Temperatur des eingeführten Fluids verändert wird oder ein Fluid einer anderen Temperatur als ein vorheriges Fluid in den Abschnitt des Bohrlochs eingeführt wird, um die Phasenübergangsrate der Substanz zu beeinflussen.

2. Verfahren nach Anspruch 1, wobei der Kunststoff ein Thermoplast ist.

3. Verfahren nach Anspruch 1 oder 2, wobei die Substanz ein Polymer ist.

4. Verfahren nach Anspruch 3, wobei das Polymer ein Homopolymer, ein Copolymer, ein aliphatischer Polyester oder ein Polyanhydrid ist, und/oder wobei das Polymer amorphe und kristalline Bereiche umfasst, und/oder
   wobei das Polymer aus der Gruppe ausgewählt ist, die aus Polyglykolsäure, Polylactid und Kombinationen daraus besteht, und/oder
   wobei das Polymer nicht reaktionsfähige Seitenketten umfasst.

5. Verfahren nach einem der vorstehenden Ansprüche, wobei die Substanz mehr als einen Phasenübergang durchmacht, wobei die Phasenübergänge unterschiedlich sind, optional,
   wobei die Substanz mindestens zwei der folgenden Veränderungen durchmacht: einen Fest-Flüssig-Phasenübergang, einen Glasübergang, eine Veränderung des Ausmaßes der Kristallinität der Substanz und physikalische Veränderungen der amorphen und/oder kristallinen Teile der Substanz.

6. Verfahren nach einem der vorstehenden Ansprüche, wobei die Isolierungsvorrichtung in der Lage ist, einem spezifischen Druckdifferential standzuhalten, bevor es ermöglicht wird, dass der mindestens eine Teil der Substanz den Phasenübergang durchmacht, optional,
   wobei das Druckdifferential im Bereich von etwa 1.000 bis etwa 25.000 Pounds-force per square inch (etwa 6,9 bis etwa 172,4 MPa) liegt.

7. Verfahren nach einem der vorstehenden Ansprüche, wobei, während und nachdem die Substanz den Phasenübergang durchgemacht hat, die Festigkeit der Substanz verringert wird, optional,

wobei die Verringerung der Festigkeit ein Ergebnis eines der Folgenden oder von Kombinationen davon ist: die Substanz wandelt sich von einem Feststoff zu einer Flüssigkeit oder einer halbflüssigen Substanz um; die Substanz löst sich auf; die Substanz zersetzt sich; die Substanz ist in der Lage, in kleinere Teile zu zerbrechen; oder die Steifigkeit der Substanz wird vermindert, ferner optional,

wobei die Substanz ein Polymer ist und wobei sich die Substanz über einen hydrolytischen Abbau des Polymermoleküls zersetzt.

8. Verfahren nach einem der vorstehenden Ansprüche, ferner umfassend das Positionieren der Isolierungsvorrichtung in einen Abschnitt des Bohrlochs (11), wobei der Schritt des Positionierens vor dem Bewirken eines Anstiegs der Temperatur, die die Bohrlochisolierungsvorrichtung umgibt, durchgeführt wird.

9. Verfahren nach Anspruch 8, wobei vor und während des Positionierens der Isolierungsvorrichtung der Abschnitt des Bohrlochs eine Temperatur aufweist, die geringer als die Phasenübergangstemperatur der Substanz ist.

10. Verfahren nach einem der vorstehenden Ansprüche, ferner Folgendes umfassend:

(A) Verringern der Temperatur zumindest eines Abschnitts des Bohrlochs;
(B) Positionieren einer Bohrlochisolierungsvorrichtung in dem mindestens einen Abschnitt des Bohrlochs, wobei die Isolierungsvorrichtung nach dem Verringern der Temperatur positioniert wird, wobei die Temperatur des mindestens einen Abschnitts des Bohrlochs auf eine Temperatur verringert wird, die geringer als die Phasenübergangstemperatur ist; und

wobei das Bewirken, dass die Temperatur, die die Bohrlochisolierungsvorrichtung umgibt, steigt, nach dem Positionieren der Bohrlochisolierungsvorrichtung stattfindet.

11. Verfahren nach Anspruch 10, wobei der Schritt des Verringerns das Einführen eines Kühlfluids in den mindestens einen Abschnitt des Bohrlochs umfasst.

12. Verfahren nach Anspruch 10 oder 11, ferner Folgendes umfassend:

Erzeugen von einem oder von mehreren Brüchen in dem Abschnitt der unterirdischen Formation; und
wobei die Substanz Polyglykolsäure umfasst.

**Revendications**

1. Méthode pour retirer un dispositif d'isolement de puits de forage (30), ayant été précédemment positionné dans une partie d'un puits de forage (11), pour limiter ou empêcher un écoulement de fluide à l'intérieur du puits de forage, la méthode comprenant les étapes consistant à :

par introduction d'un fluide dans la partie du puits de forage, amener la température environnant le dispositif d'isolement de puits de forage (30) à augmenter,
dans laquelle le dispositif d'isolement de puits de forage comprend une substance,
dans laquelle la substance :

(A) est un plastique ; et
(B) subit une transition de phase à une température de transition de phase,

dans laquelle la température environnant le dispositif d'isolement de puits de forage est amenée à augmenter jusqu'à une température qui est supérieure ou égale à la température de transition de phase,
laisser au moins une partie de la substance subir la transformation de phase de manière à diminuer l'intégrité structurale du dispositif d'isolement de puits de forage, et
retirer le dispositif d'isolement de puits de forage, dont l'intégrité structurale a été diminuée, du puits de forage,
dans laquelle le dispositif d'isolement est une bille, éventuellement une bille de fracturation, un bouchon, un bouchon de support, un bouchon de cimentation ou une garniture d'étanchéité, et
dans laquelle un traceur est utilisé pour déterminer si ou la mesure dans laquelle la substance a subi la transition de phase, et

dans laquelle, sur la base d'une information provenant du traceur, la température du fluide introduit est modifiée ou un fluide d'une température différente d'un fluide précédent est introduit dans la partie du puits de forage pour influer sur la vitesse de transition de phase de la substance.

2. Méthode selon la revendication 1, dans laquelle le plastique est un thermoplastique.

3. Méthode selon la revendication 1 ou 2, dans laquelle la substance est un polymère.

4. Méthode selon la revendication 3, dans laquelle le polymère est un homopolymère, un copolymère, un polyester aliphatique ou un polyanhydride, et/ou dans laquelle le polymère comprend des régions amorphes et cristallines, et/ou
dans laquelle le polymère est choisi dans le groupe constitué par l'acide polyglycolique, l'acide polylactique et des combinaisons de ceux-ci, et/ou
dans laquelle le polymère comprend des chaînes latérales non-réactives.

5. Méthode selon une quelconque revendication précédente, dans laquelle la substance subit plus d'une transition de phase, dans laquelle les transitions de phase sont différentes, éventuellement,
dans laquelle la substance subit au moins deux des changements suivants : une transition de phase solide/liquide, une transition vitreuse, un changement de l'ampleur de cristallinité de la substance, et des changements physiques sur les parties amorphes et/ou cristallines de la substance.

6. Méthode selon une quelconque revendication précédente, dans laquelle le dispositif d'isolement est apte à résister à un différentiel de pression spécifique avant de laisser l'au moins une partie de la substance subir la transition de phase, éventuellement,
dans laquelle le différentiel de pression est dans la plage allant d'environ 1 000 à environ 25 000 livres force par pouce carré (environ 6,9 à environ 172,4 MPa).

7. Méthode selon une quelconque revendication précédente, dans laquelle, pendant et après que la substance a subi la transition de phase, la résistance de la substance est diminuée, éventuellement,
dans laquelle la diminution de la résistance est un résultat de l'un quelconque de ce qui suit ou des combinaisons de ceci : la substance se transforme d'un solide en un liquide ou semi-liquide ; la substance se dissout ; la substance se dégrade ; la substance est apte à se briser en plus petits morceaux ; ou la rigidité de la substance est diminuée, en outre éventuellement,
dans laquelle la substance est un polymère, et dans laquelle la substance se dégrade par le biais d'une dégradation hydrolytique de la molécule polymère.

8. Méthode selon une quelconque revendication précédentes, comprenant en outre le positionnement du dispositif d'isolement dans une partie du puits de forage (11), dans laquelle l'étape de positionnement est effectuée avant de provoquer une augmentation de la température environnant le dispositif d'isolement de puits de forage.

9. Méthode selon la revendication 8, dans laquelle avant et pendant le positionnement du dispositif d'isolement, la partie du puits de forage présente une température inférieure à la température de transition de phase de la substance.

10. Méthode selon une quelconque revendication précédente, comprenant en outre les étapes consistant à :

    (A) diminuer la température d'au moins une partie du puits de forage ;
    (B) positionner un dispositif d'isolement de puits de forage dans l'au moins une partie du puits de forage, dans laquelle le dispositif d'isolement est positionné après la diminution de la température, dans laquelle la température de l'au moins une partie du puits de forage est diminuée jusqu'à une température qui est inférieure à la température de transition de phase ; et

    dans laquelle l'étape consistant à amener la température environnant le dispositif d'isolement à augmenter a lieu après le positionnement du dispositif d'isolement de puits de forage.

11. Méthode selon la revendication 10, dans laquelle l'étape de diminution comprend l'introduction d'un fluide de refroidissement dans l'au moins une partie du puits de forage.

12. Méthode selon la revendication 10 ou 11 comprenant en outre :

la création d'une ou de plusieurs fractures dans la partie de la formation souterraine ; et
dans laquelle la substance comprend un acide polyglycolique.

*FIG.1*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011278011 A1
- US 2011011591 A1
- US 2013081801 A1
- US 2008093073 A1
- US 2010032151 A1
- US 20050205266 A1